# EUROPEAN PATENT SPECIFICATION

(11) **EP 1 065 078 B1**
(45) Date of publication and mention of the grant of the patent: **21.01.2004**
(21) Application number: 00850105.8
(22) Date of filing: 16.06.2000
(51) Int. Cl.: B60G 21/055, F16F 1/38

(54) **Bush**
Lagerbuchse
Manchon de fixation

(30) Priority: 30.06.1999 SE 9902502
(43) Date of publication of application: 03.01.2001
(73) Proprietor: Trelleborg Aktiebolag, 231 22 Trelleborg (SE)
(72) Inventor: Landholm, Stefan, 214 22 Malmö (SE); Svensson, Nicolas, 236 34 Höllviken (SE); Karhammer, Martin, 331 41 Värnamo (SE)
(74) Representative: Preissner, Nicolaus

(56) References cited:
- EP-A- 0 864 773
- EP-A- 0 890 464
- FR-A- 2 683 874
- US-A- 1 993 260
- US-A- 4 495 683
- PATENT ABSTRACTS OF JAPAN vol. 1998, no. 02, 30 January 1998 (1998-01-30) & JP 09 269028 A (TOYODA GOSEI CO LTD), 14 October 1997 (1997-10-14)
- PATENT ABSTRACTS OF JAPAN vol. 017, no. 208 (M-1401), 23 April 1993 (1993-04-23) & JP 04 349012 A (NIPPON MEKTRON LTD), 3 December 1992 (1992-12-03)

## Description

The present invention relates to a bush intended for vehicle anti-roll stabilisers and comprising two elastomeric parts, for instance rubber parts, that are optionally provided with an inner reinforcement, said parts being designed to embrace together a shaft or some similar element that has a circular cross-section.

Different types of anti-roll stabiliser bushes and bushes intended for similar applications are known to the art and may consist of a single item or of two halves that can be joined together in pairs by means of an elastic joint or link.

JP 04 349012 A describes the features mentioned in the preamble of claim 1.

US-A-4,495,683 describes a bush that consists of a single item but which includes a longitudinally extending slot and which is comprised of a resilient metal material that enables the bush to can be snapped onto the shaft. The longitudinally extending slot may be parallel with or angled to the longitudinal axis of the shaft or may have an arrowed or undulating configuration.

Bushes that are comprised of two halves are described in EP-A-0864773. These bushes are made of rubber and include a metal reinforcement. The two halves are joined together through the medium of a rubber connection and are folded around the shaft so as to meet each other along a straight contact surface that extends parallel with the shaft axis.

US-A-5013166 describes a similar bush, although in this case the bush halves may also be discontinuous. A common feature of this bush construction is that the bush halves are joined together by some form of snap mechanism that includes a first part in which a groove extends longitudinally parallel with the axis of said part and a second part that includes a projection which fits into said groove.

A common feature of the aforedescribed two-part bushes is that they have a plane division and include parallel joins between the two bush parts in the longitudinal direction of the bush axis.

The known bushes have several drawbacks or disadvantages associated with their manufacture, manner in which they are fitted onto the shaft or their use, regardless of whether the bushes are combined in pairs or are mutually separate. For instance, it is difficult to achieve identical properties in all directions and the rubber from which the bushes are made is subjected to much unnecessary harsh treatment when radial forces act totally on the joins. Neither can the known bushes prevent undesirable axial displacement in the anti-roll stabiliser. Fitting of the bushes is also complicated, due to the fact that the bush halves are unable to remain firmly seated unless fitted with the aid of some auxiliary means.

The object of the present invention is to provide for relevant applications a bush with which the aforesaid drawbacks have been essentially eliminated.

The invention is characterised to this end by the features set forth in the accompanying Claims.

According to the invention, each part of the two-part bush is intended to embrace the shaft perimeter through an angle greater than 180° and is designed to enable it to be clamped firmly to the shaft or said similar element and retained thereon when mounting the bush. One part of the bush is tapered at one end thereof and the other part of the bush has at a corresponding end a recess into which the tapered part of said bush end fits.

The tapered end of each bush part may have a different tapered shape without deviating from the concept of the invention, although a V-shape or possibly a U-shape are the most suitable tapers.

The outermost end of each bush part that has a generally V-shaped taper may conveniently be straight, so as to give said part the shape of a truncated V. Other embodiments may also be given a similar straight cut.

Each part of the bush is conveniently made resilient or springy, so that it can be easily snapped onto a shaft and held there by its intrinsic resiliency. This resiliency or springiness can be achieved in different ways by reinforcing the elastomeric material, for instance by forming each half of the bush from a resilient metal element covered with an elastomeric material, for instance by encasing said metal element in rubber.

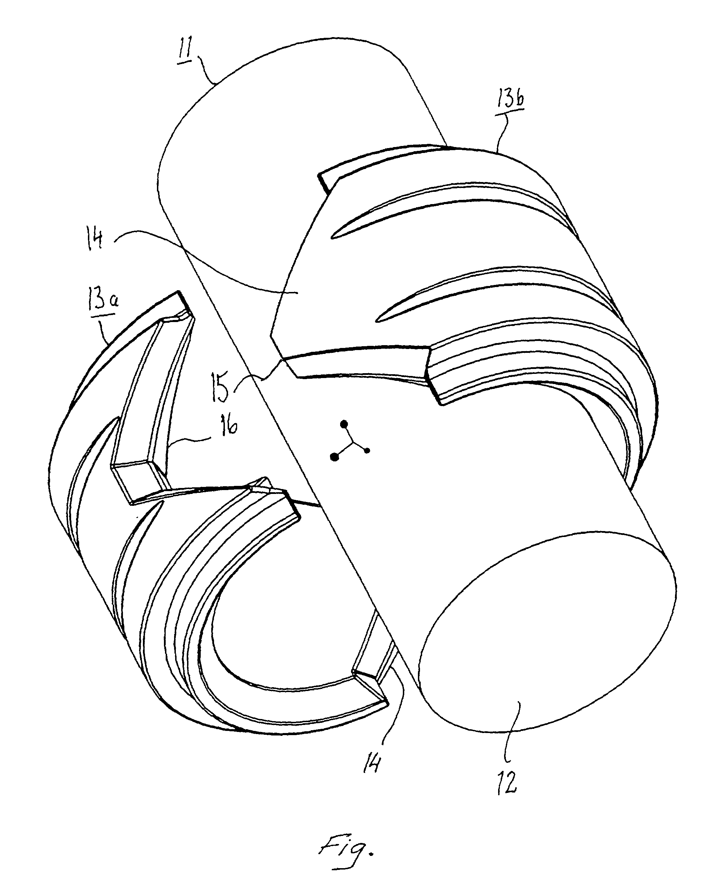

The invention will now be described in more detail with reference to the accompanying drawing, the single Figure of which illustrates a preferred embodiment of the invention from one side and in perspective.
The Figure shows a shaft 11 or similar element of circular cross-section 12. Disposed on mutually opposite sides of the shaft 11 are bush halves 13 a,b each of which has a length that is greater than half the circumference of the shaft 11. Both bush halves 13a,b have a tapered end 14 that includes a straight join establishing part 15, and an end which includes a corresponding recess 16 that is shaped and adapted to receive the tapered end 14 of the other bush half 13a,b.

The bush can be fitted to the shaft 11, by simply placing respective bush halves around the shaft and clamping said halves firmly together. The inventive design of the bush enables it to be fitted very easily, a task that must often be carried out in very confined spaces, both in the production line and in vehicle workshops. Fitting of the bush is also facilitated by the fact that axial displacement of the bush joints is made impossible. It is also found that the invention contributes towards greater radial isotropy with respect to rigidity and fatigue resistance than in the case of a bush construction that includes straight joins.

## Claims

1. A bush intended for vehicle anti-roll stabilising means and comprising two elastomeric parts (13a, 13b), for instance rubber parts, that optionally include an internal reinforcement, said parts (13a, 13b) being intended and shaped to embrace a shaft (11) or similar element of circular cross-section (12), **characterized in that**
- each of said two bush parts (13a, 13b) is adapted to embrace the shaft (11) circumference through an angle greater than 180° and is constructed that each bush-part (13a, 13b) is able to be clamped firmly alone to said shaft (11) or said element (12) when fitting the bush thereto; and
- that one end of each bush-part (13a, 13b) has a tapered shape (14) and the other end has a recess (15) that is shaped to accommodate said tapered end (14),
- whereby each bush-part (13a, 13b) has a metal element baked in said elastomeric part, to make each bush-part (13a, 13b) resilient or springy to increase the ability of clamping to said shaft (11) or said element (12).

2. A bush according to Claim 1, **characterised in that** the tapered end of each bush-part (13a, 13b) is V-shaped.

3. A bush according to Claim 1, **characterised in that** the tapered end of each bush-part (13a, 13b) is U-shaped.

4. A bush according to any one of Claims 1-3, **characterised in that** the outermost end of each tapered bush-part (13a, 13b) is straight.

## Patentansprüche

1. Lagerbuchse, für Mittel zur Drehmomentabstützung in einem Fahrzeug, bestehend aus zwei Elastomerteilen (13a, 13b), beispielsweise Gummiteilen, die wahlweise eine innere Verstärkung aufweisen, wobei die Teile (13a, 13b) ausgeführt und geformt sind, um einen Stab (11) oder eine ähnliches Element mit rundem Querschnitt (12) zu umfassen, **dadurch gekennzeichnet, dass**
- jedes der beiden Lagerbuchsen-Teile (13a, 13b) ausgeführt ist, um den Umfang des Stabes (11) über einen Winkel von mehr als 180° zu umfassen, wobei jedes der beiden Lagerbuchsen-Teile (13a, 13b) beim Anbringen der Lagerbuchse einzeln fest an den Stab (11) oder das Element (12) festgeklemmt werden kann; und
- ein Ende jedes Lagerbuchsen-Teiles (13a, 13b) eine Verjüngung (14) und das andere Ende eine Aussparung (15) aufweist, deren Form an die Verjüngung (14) angepasst ist,
- wobei jedes Lagerbuchsen-Teil (13a, 13b) ein Metallelement aufweist, das in das Elastomerteil eingebettet ist, um jedes Lagerbuchsen-Teil (13a, 13b) elastisch und federnd zu gestalten, wodurch die Klemmfähigkeit an den Stab (11) oder das Element (12) verbessert wird.

2. Lagerbuchse nach Anspruch 1, **dadurch gekennzeichnet, dass** das verjüngte Ende jedes Lagerbuchsen-Teiles (13a, 13b) v-förmig ausgestaltet ist.

3. Lagerbuchse nach Anspruch 1, **dadurch gekennzeichnet, dass** das verjüngte Ende jedes Lagerbuchsen-Teiles (13a, 13b) u-förmig ausgestaltet ist.

4. Lagerbuchse nach Anspruch 1, **dadurch gekenneichnet, dass** das äußerste Ende jedes verjüngt geformten Lagerbuchsen-Teiles (13a, 13b) eine gerade Form aufweist.

## Revendications

1. Douille destinée à des moyens de stabilisation antiroulis dans un véhicule et comprenant deux parties en élastomère (13a, 13b), par exemple des parties en caoutchouc, qui incluent en option un renforcement interne, lesdites parties (13a, 13b) étant conçues et conformées pour entourer un arbre (11) ou un élément similaire de section transversale circulaire (12), **caractérisée en ce que :**
- chacune desdites de partie de douille (13a, 13b) est adaptée à entourer la circonférence de l'arbre (11) sur un angle supérieur à 180°, et est ainsi construite que chaque partie de douille (13a, 13b) est capable d'être accrochée fermement seule sur ledit arbre (11) ou sur ledit élément (12) lorsqu'on monte la douille sur celui-ci ; et
- une extrémité de chaque partie de douille (13a, 13b) a une forme effilée (14) et l'autre extrémité a un évidement (15) conformé de manière à recevoir ladite extrémité effilée (14),
- et dans laquelle chaque partie de douille (13a, 13b) comprend un élément en métal intégré par cuisson dans ladite partie en élastomère, afin de rendre chaque partie de douille (13a, 13b) élastique ou résiliente pour augmenter la capacité de s'accrocher sur ledit arbre (11) ou sur ledit élément (12).

2. Douille selon la revendication 1, **caractérisée en ce que** l'extrémité effilée de chaque partie de douille (13a, 13b) est en forme de V.

3. Douille selon la revendication 1, **caractérisée en ce que** l'extrémité effilée de chaque partie de douille (13a, 13b) est en forme de U.

4. Douille selon l'une quelconque des revendications 1 à 3, **caractérisée en ce que** l'extrémité la plus extérieure de chaque partie de douille effilée (13a, 13b) est droite.
